# EUROPEAN PATENT APPLICATION

(11) **EP 4 435 078 A1**
(43) Date of publication of application: **25.09.2024**
(21) Application number: 22895567.0
(22) Date of filing: 14.11.2022
(51) Int. Cl.: C10N 30/00, C10N 40/30, C10M 105/36, C09K 5/04

(54) **REFRIGERATOR OIL COMPOSITION AND MIXED COMPOSITION FOR REFRIGERATOR**

(30) Priority: 16.11.2021 JP 2021186595
(71) Applicant: Idemitsu Kosan Co.,Ltd., Tokyo 100-8321 (JP)
(72) Inventor: KOJIMA, Akio, Tokyo 100-8321 (JP); KISEN, Tadashi, Tokyo 100-8321 (JP); YOSHIDA, Yukio, Tokyo 100-8321 (JP); NAKAJIMA, So, Tokyo 100-8321 (JP)
(74) Representative: Hoffmann Eitle
(86) International application number: PCT/JP2022/042209
(87) International publication number: WO 2023/090285

(57) **Abstract**

To provide a refrigerator oil composition having an appropriate dissolution viscosity when a hydrocarbon-based refrigerant is dissolved and having a low solubility of the hydrocarbon-based refrigerant, and a mixed composition for a refrigerator including the refrigerator oil composition. The problem is solved by a refrigerator oil composition used for a refrigerant including a hydrocarbon-based refrigerant, and containing one or more selected from aromatic ester-based compounds (A) represented by general formula (1). 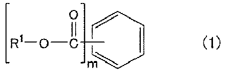 in which, R¹ is a linear or branched alkyl group having 5 or more and 24 or less carbon atoms or a linear or branched alkenyl group having 5 or more and 24 or less carbon atoms; m is an integer of 2 or more and 4 or less; and a plurality of R¹'s may be the same or different.

## Description

### Technical Field

The present invention relates to a refrigerator oil composition and a mixed composition for a refrigerator.

In the description herein, the "mixed composition for a refrigerator" refers to a composition obtained by mixing the "refrigerator oil composition" and the "refrigerant".

### Background Art

For example, a refrigerator such as a compression-type refrigerator generally includes at least a compressor, a condenser, an expansion mechanism (for example, an expansion valve), and an evaporator, and has a structure in which a mixed composition for a refrigerator circulates in a sealed system.

As a refrigerant used for a refrigerator such as a compression-type refrigerator, a fluorinated hydrocarbon compound having a low environmental load is being used instead of a hydrochlorofluorocarbon (HCFC) which has been conventionally used in many cases. Examples of the fluorinated hydrocarbon compound include saturated fluorinated hydrocarbon compounds (Hydro-Fluoro-Carbon; hereinafter, also referred to as "HFC") such as 1,1,1,2-tetrafluoroethane (R134a), difluoromethane (R32), 1,1-difluoroethane (R152a), and a mixture of difluoromethane and pentafluoroethane (R410A).

In addition, the use of unsaturated fluorinated hydrocarbon compounds (Hydro-Fluoro-Olefin; hereinafter, also referred to as "HFO") having a low global warming potential (GWP), such as 1,3,3,3-tetrafluoropropene (R1234ze), 2,3,3,3-tetrafluoropropene (R1234yf), and 1,2,3,3-tetrafluoropropene (R1234ye), has also been considered.

In recent years, from the viewpoint of further reducing the global warming potential (GWP), application of a hydrocarbon-based refrigerant such as propane (R290) has also been studied (see, for example, PTL 1).

### Citation List

### Patent Literature

PTL 1: JP 2004-043611 A

### Summary of Invention

### Technical Problem

By the way, in the hydrocarbon-based refrigerant, the viscosity of the mixed composition for a refrigerator in which the refrigerant is dissolved in the refrigerator oil composition (hereinafter, also referred to as "dissolution viscosity") tends to be lower than that of the HFC refrigerant or the HFO refrigerant. The decrease in the dissolution viscosity is a factor of the progress of wear in a sliding portion such as a compressor of a refrigerator. Therefore, the refrigerator oil composition used when the hydrocarbon-based refrigerant is used is required to have an appropriate dissolution viscosity so that good lubricity is exhibited even when the hydrocarbon-based refrigerant is dissolved.

In addition, the hydrocarbon-based refrigerant is highly flammable. Therefore, from the viewpoint of easily ensuring safety, it is desirable to reduce the amount of hydrocarbon-based refrigerant used. Accordingly, in the refrigerator oil composition used when the hydrocarbon-based refrigerant is used, it is desirable to reduce the amount of the hydrocarbon-based refrigerant to be dissolved and suppress excessive dissolution of the hydrocarbon-based refrigerant. From the viewpoint of achieving such a demand, it is desirable that the refrigerator oil composition used when using the hydrocarbon-based refrigerant has a low solubility of the hydrocarbon-based refrigerant.

However, the refrigerator oil composition of PTL 1 is insufficient in any performance.

Therefore, an object of the present invention is to provide a refrigerator oil composition having an appropriate dissolution viscosity when a hydrocarbon-based refrigerant is dissolved and having a low solubility of the hydrocarbon-based refrigerant, and a mixed composition for a refrigerator including the refrigerator oil composition.

### Solution to Problem

According to the present invention, the following [1] to [3] are provided.
[1] A refrigerator oil composition used for a refrigerant including a hydrocarbon-based refrigerant, the refrigerator oil composition containing one or more selected from aromatic ester-based compounds (A) represented by the following general formula (1): 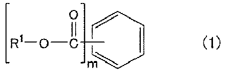 in which, R¹ is a linear or branched alkyl group having 5 or more and 24 or less carbon atoms or a linear or branched alkenyl group having 5 or more and 24 or less carbon atoms; m is an integer of 2 or more and 4 or less; and a plurality of R¹'s may be the same or different.
[2] A mixed composition for a refrigerator, containing: the refrigerator oil composition according to [1]; and a refrigerant including a hydrocarbon-based refrigerant.
[3] A method for producing a refrigerator oil composition used for a refrigerant including a hydrocarbon-based refrigerant, the method including a step of blending one or more selected from aromatic ester-based compounds (A) represented by the following general formula (1): 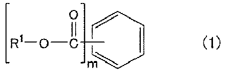 in which, R¹ is a linear or branched alkyl group having 5 or more and 24 or less carbon atoms or a linear or branched alkenyl group having 5 or more and 24 or less carbon atoms; m is an integer of 2 or more and 4 or less; and a plurality of R¹'s may be the same or different.

### Advantageous Effects of Invention

According to the present invention, it is possible to provide a refrigerator oil composition having an appropriate dissolution viscosity when the hydrocarbon-based refrigerant is dissolved and having a low solubility of the hydrocarbon-based refrigerant, and a mixed composition for a refrigerator including the refrigerator oil composition.

### Brief Description of Drawings

Fig. 1 is a cross-sectional view showing a viscosity measurement apparatus used for measuring the dissolution viscosity in Examples.
Fig. 2 is an enlarged cross-sectional view showing a main part of the viscosity measurement apparatus used for measuring the dissolution viscosity in Examples.
Fig. 3 is a cross-sectional view showing a part of a measurement procedure by the measurement apparatus used for measuring the dissolution viscosity in Examples.

### Description of Embodiments

Upper limit values and lower limit values of numerical ranges described in this description can be arbitrarily combined. For example, when "A to B" and "C to D" are described as numerical ranges, the numerical ranges of "A to D" and "C to B" are also included in the scope of the present invention.

In addition, the numerical range "lower limit value to upper limit value" described in this description means the lower limit value or more, and the upper limit value or less, unless otherwise specified.

Also in this description, the numerical value in Examples is a numerical value usable as an upper limit value or a lower limit value.

### [Embodiment of Refrigerator Oil Composition]

The refrigerator oil composition of the present embodiment is a refrigerator oil composition used for a refrigerant including a hydrocarbon-based refrigerant, and contains one or more selected from aromatic ester-based compounds (A) represented by the following general formula (1). 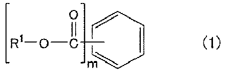 in which, R¹ is a linear or branched alkyl group having 5 or more and 24 or less carbon atoms or a linear or branched alkenyl group having 5 or more and 24 or less carbon atoms; m is an integer of 2 or more and 4 or less; and a plurality of R¹'s may be the same or different.

The present inventors have conducted intensive studies to solve the above problems. As a result, the present inventors have found that the aromatic ester-based compound (A) represented by the above general formula (1) is excellent in both of the performance of suppressing the decrease in the dissolution viscosity when the hydrocarbon-based refrigerant is dissolved and the performance of suppressing the dissolution of the hydrocarbon-based refrigerant, and have completed the present invention.

The mechanism by which the effects of the present invention are exhibited is not clearly understood, but is presumed to be as follows, for example. That is, it is presumed that the above-mentioned effects are achieved because the aromatic ester-based compound (A) represented by the above-mentioned general formula (1) has two or more ester groups bonded to a benzene ring, and because the aromatic ester-based compound (A) represented by the above-mentioned general formula (1) has a molecular structure having a good balance for achieving the above-mentioned problems.

In the refrigerator oil composition of the present embodiment, the aromatic ester-based compound (A) functions as a base oil.

Here, the refrigerator oil composition of the present embodiment may be composed only of the aromatic ester-based compound (A), but may contain other components other than the aromatic ester-based compound (A) within a range that does not impair the effects of the present invention.

In the refrigerator oil composition of the present embodiment, the content of the aromatic ester-based compound (A) is preferably 80% by mass or more, more preferably 85% by mass or more, still more preferably 90% by mass or more, even more preferably 95% by mass or more, further preferably 99% by mass or more, and still further preferably 100% by mass, based on the total amount (100% by mass) of the refrigerator oil composition. The content of the aromatic ester-based compound (A) may be 100% by mass or less based on the total amount (100% by mass) of the refrigerator oil composition.

Hereinafter, the components contained in the refrigerator oil composition of the present embodiment will be described in detail.

### <Aromatic Ester-based Compound (A)>

The refrigerator oil composition of the present embodiment contains an aromatic ester-based compound (A).

The aromatic ester-based compound (A) is one or more selected from the compounds represented by the following general formula (1).

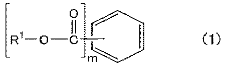

In the general formula (1), R¹ is a linear or branched alkyl group having 5 or more and 24 or less carbon atoms or a linear or branched alkenyl group having 5 or more and 24 or less carbon atoms. A plurality of R¹'s may be the same or different.

When the number of carbon atoms of the alkyl group or alkenyl group, which can be selected as R¹, is 4 or less, the viscosity of the aromatic ester-based compound (A) itself becomes low, and the dissolution viscosity when the hydrocarbon-based refrigerant is dissolved also becomes low. In addition, when the number of carbon atoms of the alkyl group or alkenyl group is 25 or more, it becomes difficult to obtain the compound. In addition, the low-temperature fluidity may deteriorate.

Here, the number of carbon atoms of the alkyl group or alkenyl group is preferably 6 or more, more preferably 8 or more, still more preferably 10 or more, even more preferably 12 or more, further preferably 14 or more, and still further preferably 16 or more, from the viewpoint of setting the viscosity of the aromatic ester-based compound (A) itself to be in an appropriate range and from the viewpoint of making it difficult to further reduce the dissolution viscosity when the hydrocarbon-based refrigerant is dissolved, and thereby making it easy to obtain an appropriate dissolution viscosity.

On the other hand, the number of carbon atoms of the alkyl group or alkenyl group, which can be selected as R¹ is preferably 22 or less, and more preferably 20 or less, from the viewpoint of ensuring easy availability and low-temperature fluidity.

The upper limit values and the lower limit values of these numerical ranges can be arbitrarily combined. Specifically, it is preferably 6 to 22, more preferably 8 to 22, still more preferably 10 to 22, even more preferably 12 to 20, further preferably 14 to 20, and still further preferably 16 to 20.

The alkyl group or alkenyl group which can be selected as R¹ may be linear or branched, but R¹ is preferably a linear alkenyl group from the viewpoint of setting the viscosity of the aromatic ester-based compound (A) itself in a more appropriate range and from the viewpoint of making it difficult to further reduce the dissolution viscosity when the hydrocarbon-based refrigerant is dissolved, and thereby making it easy to obtain an appropriate dissolution viscosity.

Examples of the linear or branched alkyl group which can be selected as R¹ include a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group, a heneicosyl group, a docosyl group, a tricosyl group, and a tetracosyl group.

Examples of the linear or branched alkenyl group which can be selected as R¹ include a pentenyl group, a hexenyl group, a heptenyl group, an octenyl group, a nonenyl group, a decenyl group, an undecenyl group, a dodecenyl group, a tridecenyl group, a tetradecenyl group, a pentadecenyl group, a hexadecenyl group, a heptadecenyl group, an octadecenyl group, a nonadecenyl group, an icosenyl group, a heneicosenyl group, a docosenyl group, a tricosenyl group, and a tetracosenyl group.

The branching position and the number of branches in the branched alkyl group or the branched alkenyl group are not particularly limited. In addition, the unsaturated bond site and the unsaturated bond site in the alkenyl group are also not particularly limited.

In the general formula (1), m is an integer of 2 or more and 4 or less.

When m is 1, the viscosity of the aromatic ester-based compound (A) itself becomes low, and the dissolution viscosity when the hydrocarbon-based refrigerant is dissolved also becomes low.

When m is 5 or more, it becomes difficult to obtain the compound.

Here, m is preferably 3 from the viewpoint of easily achieving a good balance between setting the viscosity of the aromatic ester-based compound (A) itself to a more appropriate range, making it easier to obtain an appropriate dissolution viscosity by making it more difficult to decrease the dissolution viscosity when the hydrocarbon-based refrigerant is dissolved, and making it easier to suppress the dissolution of the hydrocarbon-based refrigerant.

In a case where m = 2, the two groups represented by -C(O)OR¹ may be present at the 1-position and 2-position, the 1-position and 3-position, or the 1-position and 4-position of the benzene ring, but are preferably present at the 1-position and 2-position.

In addition, in a case where m = 3, the three groups represented by -C(O)OR¹ may be present at the 1-position, 2-position and 3-position, the 1-position, 2-position and 4-position, or the 1-position, 3-position and 5-position of the benzene ring, but are preferably present at the 1-position, 2-position and 4-position.

In addition, in a case where m = 4, the four groups represented by -C(O)OR¹ may be present at the 1-position, 2-position, 3-position and 4-position, the 1-position, 2-position, 3-position and 5-position, or the 1-position, 2-position, 4-position and 5-position of the benzene ring, and are preferably present at the 1-position, 2-position, 4-position and 5-position.

A plurality of R¹'s may be the same or different, and are preferably the same from the viewpoint of easy availability of the aromatic ester-based compound (A).

### <Method for Producing Aromatic Ester-based Compound (A)>

The method for producing the aromatic ester compound (A) is not particularly limited, and can be produced, for example, by a reaction between one or more selected from an aromatic carboxylic acid compound (A1) represented by the following general formula (2) and an anhydride thereof and an alcohol represented by the following general formula (3). The aromatic ester-based compound (A) produced by the reaction between one or more selected from the aromatic carboxylic acid compound (A1) represented by the following general formula (2) and the anhydride thereof and the alcohol represented by the following general formula (3) is preferably a complete ester.

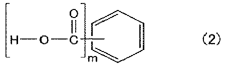

R¹-OH (3)

In the general formula (2), m is the same as in the above general formula (1), and a suitable range is also the same as in the above general formula (1).

Examples of the compound represented by the general formula (2) include phthalic acid, isophthalic acid, terephthalic acid, hemimellitic acid, trimellitic acid, trimesic acid, mellophanic acid, prehnitic acid, and pyromellitic acid, and anhydrides thereof, and among these, phthalic acid, trimellitic acid, and pyromellitic acid, and anhydrides thereof are preferable, and trimellitic acid and an anhydride thereof are more preferable.

In the general formula (3), R¹ is the same as in the above general formula (1), and a suitable range is also the same as in the above general formula (1).

The conditions for the reaction between the aromatic carboxylic acid compound (A1) represented by the general formula (2) and the alcohol represented by the general formula (3) are not particularly limited, and general conditions employed by a person skilled in the art for esterification are appropriately employed.

### <Kinematic Viscosity of Aromatic Ester-based Compound (A)>

The kinematic viscosity at 40°C of the aromatic ester-based compound (A) is preferably 20 mm²/s or more, more preferably 30 mm²/s or more, and still more preferably 40 mm²/s or more, from the viewpoint of suppressing wear in a sliding portion such as a compressor of a refrigerator. On the other hand, from the viewpoint of oil return, it is preferably 350 mm²/s or less, more preferably 320 mm²/s or less, and still more preferably 300 mm²/s or less.

The upper limit values and the lower limit values of these numerical ranges can be arbitrarily combined. Specifically, it is preferably 20 mm²/s to 350 mm²/s, more preferably 30 mm²/s to 320 mm²/s, and still more preferably 40 mm²/s to 300 mm²/s.

The kinematic viscosity at 100°C of the aromatic ester-based compound (A) is preferably 4 mm²/s or more, more preferably 6 mm²/s or more, still more preferably 8 mm²/s or more, and even more preferably 9 mm²/s or more, from the viewpoint of suppressing wear in a sliding portion such as a compressor of a refrigerator. On the other hand, from the viewpoint of oil return, it is preferably 70 mm²/s or less, more preferably 60 mm²/s or less, and still more preferably 50 mm²/s or less.

The upper limit values and the lower limit values of these numerical ranges can be arbitrarily combined. Specifically, it is preferably 4 mm²/s to 70 mm²/s, more preferably 6 mm²/s to 70 mm²/s, still more preferably 8 mm²/s to 60 mm²/s, and even more preferably 9 mm²/s to 50 mm²/s.

In the description herein, the kinematic viscosity of the aromatic ester-based compound (A) means a value measured in accordance with JIS K 2283:2000.

### <Viscosity Index of Aromatic Ester-based Compound (A)>

The viscosity index of the aromatic ester-based compound (A) is preferably 110 or more, more preferably 120 or more, still more preferably 130 or more, even more preferably 140 or more, and still further preferably 150 or more, from the viewpoint of easily improving the viscosity characteristics of the aromatic ester-based compound (A) (in other words, from the viewpoint of easily adjusting the viscosity to an appropriate range in a wide temperature region). The upper limit of the viscosity index of the aromatic ester-based compound (A) is not particularly limited, and is usually 300 or less.

### <Base Oil Other than Aromatic Ester-based Compound (A)>

The refrigerator oil composition of the present embodiment may further contain other base oil other than the aromatic ester-based compound (A), or may not contain.

The other base oil other than the aromatic ester-based compound (A) includes one or more selected from the group consisting of mineral oils and synthetic oils not corresponding to the aromatic ester-based compound (A).

Examples of the mineral oil include an atmospheric residue obtained by subjecting a crude oil such as a paraffinic crude oil, an intermediate base crude oil, or a naphthenic crude oil to atmospheric distillation; a distillate oil obtained by subjecting the atmospheric residue to distillation under reduced pressure; a mineral oil obtained by subjecting the distillate oil to one or more treatments such as solvent de-asphalting, solvent extraction, hydrocracking, solvent dewaxing, catalytic dewaxing, or hydrorefining; and a wax-isomerized mineral oil.

The mineral oil may be used alone or may be used in combination of two or more thereof.

Examples of the synthetic oil not corresponding to the aromatic ester-based compound (A) include polyvinyl ethers; polyalkylene glycols; copolymers of polyalkylene glycol or its monoether and polyvinyl ether; polyol esters not corresponding to the aromatic ester-based compound (A); polyesters; polycarbonates; hydrides of α-olefin oligomers; alicyclic hydrocarbon compounds; alkylated aromatic hydrocarbon compounds; and GTL base oils produced by isomerizing GTL WAX (gas-to-liquid wax) produced by the Fischer-Tropsch process, or the like.

The synthetic oil may be used alone or may be used in combination of two or more thereof.

From the viewpoint of more easily exhibiting the effects of the present invention, the content of the mineral oil is preferably small. Specifically, the content of the mineral oil is preferably less than 10 parts by mass, more preferably less than 1 part by mass, still more preferably less than 0.1 parts by mass, and even more preferably, the mineral oil is not contained with respect to 100 parts by mass of the aromatic ester-based compound (A).

In addition, from the same viewpoint, the content of the synthetic oil which does not correspond to the aromatic ester-based compound (A) is preferably small. Specifically, the content of the synthetic oil which does not correspond to the aromatic ester-based compound (A) is preferably less than 100 parts by mass, more preferably less than 50 parts by mass, still more preferably less than 30 parts by mass, even more preferably less than 10 parts by mass, further preferably less than 1 part by mass, and still further preferably less than 0.1 parts by mass with respect to 100 parts by mass of the aromatic ester-based compound (A), and even further preferably, the synthetic oil not corresponding to the aromatic ester-based compound (A) is not contained.

<Additive>

The refrigerator oil composition of the present embodiment may or may not further contain an additive as long as the effects of the present invention are not impaired.

Examples of the additive include additives that can be generally blended in a refrigerator oil composition.

Examples of such additives include one or more selected from the group consisting of antioxidants, oxygen scavengers, acid scavengers, extreme pressure agents, oiliness agents, metal deactivators, and anti-foaming agents.

The total content of these additives is preferably 0% by mass to 10% by mass, more preferably 0.01% by mass to 5% by mass, still more preferably 0.1% by mass to 3% by mass, based on the total amount (100% by mass) of the refrigerator oil composition.

### (Antioxidant)

Examples of the antioxidant include phenol-based antioxidants such as 2,6-di-tert-butyl-4-methylphenol, 2,6-di-tert-butyl-4-ethylphenol, and 2,2'-methylenebis(4-methyl-6-tertbutylphenol), and amine-based antioxidants such as phenyl-α-naphthylamine and N.N'-diphenyl-p-phenylenediamine.

The antioxidant may be used alone or may be used in combination of two or more thereof.

### (Oxygen Scavenger)

Examples of the oxygen scavenger include aliphatic unsaturated compounds and terpenes having a double bond.

The aliphatic unsaturated compound is preferably an unsaturated hydrocarbon, and specific examples thereof include an olefin; and a polyene such as a diene and a triene. From the viewpoint of reactivity with oxygen, the olefin is preferably an α-olefin such as 1-tetradecene, 1-hexadecene, and 1-octadecene.

As the aliphatic unsaturated compound other than those described above, unsaturated aliphatic alcohols having conjugated double bonds such as vitamin A ((2E,4E,6E,8E)-3,7-dimethyl-9-(2,6,6-trimethylcyclohexen-1-yl)nona-2,4,6,8-tetraen-1-ol) represented by the molecular formula C₂₀H₃₀O are preferable from the viewpoint of reactivity with oxygen.

As the terpene having a double bond, a terpene-based hydrocarbon having a double bond is preferable, and from the viewpoint of reactivity with oxygen, α-farnesene (C₁₅H₂₄: 3,7,11-trimethyldodeca-1,3,6,10-tetraene) and β-farnesene (C₁₅H₂₄: 7,11-dimethyl-3-methylidenedodeca-1,6,10-triene) are more preferable.

The oxygen scavenger may be used alone or may be used in combination of two or more thereof.

### (Acid Scavenger)

Examples of the acid scavenger include epoxy compounds such as phenyl glycidyl ether, alkyl glycidyl ether, alkylene glycol glycidyl ether, cyclohexene oxide, α-olefin oxide, and epoxidized soybean oil. As the acid scavenger, at least one selected from glycidyl ester, glycidyl ether, and α-olefin oxide is particularly suitably used.

Examples of the glycidyl ether include a glycidyl ether derived from a linear, branched, or cyclic saturated or unsaturated aliphatic monohydric or polyhydric alcohol having usually 3 to 30 carbon atoms, preferably 4 to 24 carbon atoms, and more preferably 6 to 16 carbon atoms, or a glycidyl ether derived from an aromatic compound containing one or more hydroxy groups. In the case of an aliphatic polyhydric alcohol or an aromatic compound containing two or more hydroxy groups, from the viewpoint of suppressing an increase in the hydroxyl value for the stability of a lubricating oil composition, it is preferable that all of the hydroxy groups are glycidyl etherified.

Among these, glycidyl ethers derived from linear, branched, or cyclic saturated aliphatic monoalcohols having 6 to 16 carbon atoms are particularly preferable. Examples of such glycidyl ethers include 2-ethyl ethyl glycidyl ether, isononyl glycidyl ether, caprinoyl glycidyl ether, lauryl glycidyl ether, and myristyl glycidyl ether.

On the other hand, as the α-olefin oxide, those having 4 to 50 carbon atoms, preferably 4 to 24 carbon atoms, and more preferably 6 to 16 carbon atoms are used.

The acid scavenger may be used alone or may be used in combination of two or more thereof.

### (Extreme Pressure Agent)

Examples of the extreme pressure agent include phosphorus-based extreme pressure agents such as phosphate esters, acidic phosphate esters, phosphite esters, acidic phosphite esters, and amine salts thereof.

Among these phosphorus-based extreme pressure agents, tricresyl phosphate, trithiophenyl phosphate, tri(nonylphenyl) phosphite, dioleyl hydrogen phosphite, and 2-ethylhexyl diphenyl phosphite are particularly preferable from the viewpoint of extreme pressure properties and friction characteristics.

Also, examples of the extreme pressure agent include a metal salt of a carboxylic acid. The metal salt of a carboxylic acid mentioned herein is preferably a metal salt of a carboxylic acid having 3 to 60 carbon atoms, more preferably a metal salt of a carboxylic acid having 3 to 30 carbon atoms, and particularly preferably a metal salt of a fatty acid having 12 to 30 carbon atoms. In addition, metal salts of dimer acid or trimer acid of the fatty acid and dicarboxylic acid having 3 to 30 carbon atoms can be exemplified. Among these, a metal salt of a fatty acid having 12 to 30 carbon atoms and a metal salt of a dicarboxylic acid having 3 to 30 carbon atoms are particularly preferable.

On the other hand, the metal constituting the metal salt is preferably an alkali metal or an alkaline earth metal, and particularly preferably an alkali metal.

Examples of the extreme pressure agent other than the above-mentioned extreme pressure agents include sulfur-based extreme pressure agents such as sulfurized fats and oils, sulfurized fatty acids, sulfurized esters, sulfurized olefins, dihydrocarbyl polysulfides, thiocarbamates, thioterpenes, and dialkyl thiodipropionates.

The extreme pressure agent may be used alone or may be used in combination of two or more thereof.

### (Oiliness Agent)

Examples of the oiliness agent include aliphatic saturated or unsaturated monocarboxylic acids such as stearic acid and oleic acid, polymerized fatty acids such as dimer acid and hydrogenated dimer acid, hydroxy fatty acids such as ricinoleic acid and 12-hydroxystearic acid, aliphatic saturated or unsaturated monoalcohols such as lauryl alcohol and oleyl alcohol, aliphatic saturated or unsaturated monoamines such as stearylamine and oleylamine, aliphatic saturated or unsaturated monocarboxylic acid amides such as lauric acid amide and oleic acid amide, and partial esters of polyhydric alcohols such as glycerol and sorbitol and aliphatic saturated or unsaturated monocarboxylic acids.

The oiliness agent may be used alone or may be used in combination of two or more thereof.

### (Metal Deactivator)

Examples of the metal deactivator include copper deactivators such as N-[N,N'-dialkyl (alkyl group having 3 to 12 carbon atoms) aminomethyl]triazole.

The metal deactivator may be used alone or may be used in combination of two or more thereof.

### (Anti-Foaming Agent)

Examples of the anti-foaming agent include silicone oil and fluorinated silicone oil.

The anti-foaming agent may be used alone or may be used in combination of two or more thereof.

### [Method for Producing Refrigerator Oil Composition]

A method for producing the refrigerator oil composition of the present embodiment is not particularly limited.

For example, the method for producing the refrigerator oil composition of the present embodiment is a method for producing a refrigerator oil composition used for a refrigerant including a hydrocarbon-based refrigerant, and the method includes a step of blending one or more selected from aromatic ester-based compounds (A) represented by the following general formula (1). 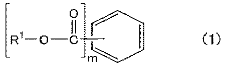 in which, R¹ is a linear or branched alkyl group having 5 or more and 24 or less carbon atoms or a linear or branched alkenyl group having 5 or more and 24 or less carbon atoms; m is an integer of 2 or more and 4 or less; and a plurality of R¹'s may be the same or different.

Examples of the step of blending one or more selected from the aromatic ester-based compounds (A) represented by the general formula (1) include blending one or more selected from the aromatic ester-based compounds (A) obtained by the method for producing the aromatic ester-based compound (A) described above.

The method for producing the refrigerator oil composition of the present embodiment may further have a step of mixing the aromatic ester-based compound (A) with a base oil other than the aromatic ester-based compound (A), and may further have a step of mixing the above-mentioned additive, or may not have such a step.

When the above-mentioned additive is blended with the aromatic ester-based compound (A), the above-mentioned additive may be blended after being made into a solution (dispersion) form by adding a diluent oil.

In the general formula (1), the preferred ranges of R¹ and m are as described above in the description of the aromatic ester-based compound (A).

### [Physical Properties of Refrigerator Oil Composition]

### <Kinematic Viscosity of Refrigerator Oil Composition>

The kinematic viscosity at 40°C of the refrigerator oil composition is preferably 20 mm²/s or more, more preferably 30 mm²/s or more, and still more preferably 40 mm²/s or more, from the viewpoint of suppressing wear in a sliding portion such as a compressor of a refrigerator. On the other hand, from the viewpoint of oil return, it is preferably 350 mm²/s or less, more preferably 320 mm²/s or less, and still more preferably 300 mm²/s or less.

The upper limit values and the lower limit values of these numerical ranges can be arbitrarily combined. Specifically, it is preferably 20 mm²/s to 350 mm²/s, more preferably 30 mm²/s to 320 mm²/s, and still more preferably 40 mm²/s to 300 mm²/s.

The kinematic viscosity at 100°C of the refrigerator oil composition is preferably 4 mm²/s or more, more preferably 6 mm²/s or more, still more preferably 8 mm²/s or more, and even more preferably 9 mm²/s or more, from the viewpoint of suppressing wear in a sliding portion such as a compressor of a refrigerator. On the other hand, from the viewpoint of oil return, it is preferably 70 mm²/s or less, more preferably 60 mm²/s or less, and still more preferably 50 mm²/s or less.

The upper limit values and the lower limit values of these numerical ranges can be arbitrarily combined. Specifically, it is preferably 4 mm²/s to 70 mm²/s, more preferably 6 mm²/s to 70 mm²/s, still more preferably 8 mm²/s to 60 mm²/s, and even more preferably 9 mm²/s to 50 mm²/s.

In the description herein, the kinematic viscosity of the refrigerator oil composition means a value measured in accordance with JIS K 2283:2000.

### <Dissolution Viscosity of Refrigerator Oil Composition When Hydrocarbon-based Refrigerant is Dissolved>

The dissolution viscosity of the refrigerator oil composition when the hydrocarbon-based refrigerant is dissolved, which is measured by the method described in Examples which will be described later, is preferably 2.2 mm²/s or more, more preferably 2.5 mm²/s or more, still more preferably 2.9 mm²/s or more, even more preferably 3.3 mm²/s or more, further preferably 3.7 mm²/s or more, still further preferably 4.0 mm²/s or more, even further preferably 4.3 mm²/s or more, and yet still more preferably 4.6 mm²/s or more, from the viewpoint of suppressing wear in a sliding portion such as a compressor of a refrigerator. On the other hand, it is preferably 50 mm²/s or less.

The dissolution viscosity is a value measured in a state in which the hydrocarbon-based refrigerant of the refrigerator oil composition is dissolved. Therefore, the dissolution viscosity can also be said to be the viscosity of the mixed composition for a refrigerator measured by the method described in Examples to be described later.

The dissolution viscosity is a value measured in a state in which the hydrocarbon-based refrigerant of the refrigerator oil composition is dissolved. Therefore, the dissolution viscosity can also be said to be the viscosity of the mixed composition for a refrigerator measured by the method described in Examples to be described later.

### <Solubility of Hydrocarbon-based Refrigerant in Refrigerator Oil Composition>

The solubility of the hydrocarbon-based refrigerant in the refrigerator oil composition, which is measured by the method described in Examples which will be described later, is preferably less than 18.0% by mass, more preferably 17.5% by mass or less, still more preferably 17.0% by mass or less, even more preferably 16.5% by mass or less, further preferably 16.0% by mass or less, still further preferably 15.5% by mass or less, and even further preferably 15.0% by mass or less, from the viewpoint of suppressing the amount of the hydrocarbon-based refrigerant used and easily ensuring safety. On the other hand, it is preferably 1% by mass or more.

### [Mixed Composition for Refrigerator]

The refrigerator oil composition is mixed with a refrigerant and used as a mixed composition for a refrigerator.

That is, the mixed composition for a refrigerator contains the above-mentioned refrigerator oil composition and a refrigerant.

Hereinafter, the refrigerant will be described.

### <Refrigerant>

### (Hydrocarbon-based Refrigerant)

The refrigerant used in the present embodiment is a refrigerant including a hydrocarbon-based refrigerant.

As the hydrocarbon-based refrigerant, a hydrocarbon having 1 or more and 8 or less carbon atoms is preferable, a hydrocarbon having 1 or more and 5 or less carbon atoms is more preferable, and a hydrocarbon having 3 or more and 5 or less carbon atoms is still more preferable. When the number of carbon atoms is 8 or less, the boiling point of the refrigerant does not become too high, which is preferable as a refrigerant. Examples of the hydrocarbon-based refrigerant include one or more selected from the group consisting of methane, ethane, ethylene, propane (R290), cyclopropane, propylene, n-butane, isobutane (R600a), 2-methylbutane, n-pentane, isopentane, cyclopentane isobutane, and normal hexane.

The hydrocarbon-based refrigerant may be used alone or may be used in combination of two or more thereof.

### (Other Refrigerant)

In the present embodiment, the refrigerant may be a mixed refrigerant including other refrigerants as necessary in addition to the hydrocarbon-based refrigerant.

Examples of the other refrigerant include one or more selected from a saturated fluorinated hydrocarbon refrigerant, an unsaturated fluorinated hydrocarbon refrigerant, carbon dioxide, and ammonia.

Hereinafter, the saturated fluorinated hydrocarbon refrigerant and the unsaturated fluorinated hydrocarbon refrigerant will be described.

### - Saturated Fluorinated Hydrocarbon Refrigerant -

The saturated fluorinated hydrocarbon refrigerant is preferably a fluoride of an alkane having 1 to 4 carbon atoms, more preferably a fluoride of an alkane having 1 to 3 carbon atoms, and still more preferably a fluoride of an alkane having 1 or 2 carbon atoms (methane or ethane). Examples of the fluoride of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1,1,2,2-tetrafluoroethane (R134), and 1,1,1,2,2-pentafluoroethane (R125).

These may be used alone or may be used in combination of two or more thereof.

### - Unsaturated Fluorinated Hydrocarbon Refrigerant -

Examples of the unsaturated fluorinated hydrocarbon refrigerant include a compound represented by the following general formula (4).

CₓF_{y}H_{z} (4)

In the general formula (4), x is an integer of 2 to 6, y is an integer of 1 to 11, and z is an integer of 1 to 11, and the compound has one or more carbon-carbon unsaturated bonds in a molecule.

The general formula (4) represents the type and number of elements in a molecule, and specifically represents an unsaturated fluorinated hydrocarbon compound having 2 to 6 carbon atoms C. The unsaturated fluorinated hydrocarbon compound having 2 to 6 carbon atoms has physical and chemical properties such as a boiling point, a freezing point, and a latent heat of vaporization required as a refrigerant.

In the general formula (4), the bonding form of the x carbon atoms represented by Cₓ includes a carbon-carbon single bond and unsaturated bonds such as a carbon-carbon double bond. The carbon-carbon unsaturated bond is preferably a carbon-carbon double bond from the viewpoint of stability, and the unsaturated fluorinated hydrocarbon compound has one or more unsaturated bonds such as a carbon-carbon double bond in the molecule, and the number thereof is preferably 1. That is, at least one of the bonding forms of x carbon atoms represented by Cₓ is more preferably a carbon-carbon double bond.

Preferred examples of the unsaturated fluorinated hydrocarbon compound include fluorides of a linear or branched chain olefin having 2 to 6 carbon atoms and a cyclic olefin having 4 to 6 carbon atoms.

Specifically, a fluoride of ethylene into which 1 to 3 fluorine atoms are introduced, a fluoride of propene into which 1 to 5 fluorine atoms are introduced, a fluoride of butene into which 1 to 7 fluorine atoms are introduced, a fluoride of pentene into which 1 to 9 fluorine atoms are introduced, a fluoride of hexene into which 1 to 11 fluorine atoms are introduced, a fluoride of cyclobutene into which 1 to 5 fluorine atoms are introduced, a fluoride of cyclopentene into which 1 to 7 fluorine atoms are introduced, and a fluoride of cyclohexene into which 1 to 9 fluorine atoms are introduced can be mentioned.

Among these, a fluoride of propene is preferable, and propene into which 3 to 5 fluorine atoms are introduced is more preferable. To be specific, one or more selected from 1,3,3,3-tetrafluoropropene (R1234ze), 2,3,3,3-tetrafluoropropene (R1234yf), and 1,2,3,3-tetrafluoropropene (R1234ye) are preferable, and 2,3,3,3-tetrafluoropropene (R1234yf) is more preferable.

The unsaturated fluorinated hydrocarbon refrigerant may be used alone or may be used in combination of two or more thereof.

### (Content of Hydrocarbon-based Refrigerant in Refrigerant)

In the present embodiment, the refrigerant includes a hydrocarbon-based refrigerant.

The content of the hydrocarbon-based refrigerant is preferably 20% by mass to 100% by mass, more preferably 30% by mass to 100% by mass, still more preferably 40% by mass to 100% by mass, even more preferably 50% by mass to 100% by mass, further preferably 60% by mass to 100% by mass, still further preferably 70% by mass to 100% by mass, even further preferably 80% by mass to 100% by mass, and yet still more preferably 90% by mass to 100% by mass based on the total amount of the refrigerant.

### (Amount of Refrigerant and Refrigerator Oil Composition Used)

In the mixed composition for a refrigerator of the present embodiment, the amount of the refrigerant and the refrigerator oil composition used is preferably 30/70 to 90/10 in mass ratio of the refrigerator oil composition to the refrigerant [(refrigerator oil composition)/(refrigerant)]. When the mass ratio of the refrigerator oil composition to the refrigerant is within this range, lubricity and suitable refrigerating capacity of the refrigerator can be obtained.

### [Application of Refrigerator Oil Composition and Mixed Composition for Refrigerator]

The refrigerator oil composition and the mixed composition for a refrigerator of the present embodiment are preferably used in, for example, a refrigeration system, a hot water supply system, or a heating system. Specific examples of the application include air conditioners, refrigerators, freezers, vending machines, and showcases. Examples of the air conditioners include car air conditioners such as open-type car air conditioners and electric car air conditioners; and gas heat pump (GHP) air conditioners.

### [One Embodiment of the Present Invention Provided]

In one embodiment of the present invention, the following [1] to [6] are provided.
[1] A refrigerator oil composition used for a refrigerant including a hydrocarbon-based refrigerant, the refrigerator oil composition containing one or more selected from aromatic ester-based compounds (A) represented by the following general formula (1): 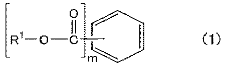 in which, R¹ is a linear or branched alkyl group having 5 or more and 24 or less carbon atoms or a linear or branched alkenyl group having 5 or more and 24 or less carbon atoms; m is an integer of 2 or more and 4 or less; and a plurality of R¹'s may be the same or different.
[2] The refrigerator oil composition according to [1], in which in the general formula (1), R¹ is a linear or branched alkyl group having 6 or more and 22 or less carbon atoms or a linear or branched alkenyl group having 6 or more and 22 or less carbon atoms, and m = 3.
[3] The refrigerator oil composition according to [1] or [2], in which a content of the aromatic ester-based compound (A) is 80% by mass or more based on a total amount of the refrigerator oil composition.
[4] The refrigerator oil composition according to any one of [1] to [3], in which the hydrocarbon-based refrigerant is a hydrocarbon having 1 or more and 8 or less carbon atoms.
[5] A mixed composition for a refrigerator, containing: the refrigerator oil composition according to any one of [1] to [4]; and a refrigerant including a hydrocarbon-based refrigerant.
[6] A method for producing a refrigerator oil composition used for a refrigerant including a hydrocarbon-based refrigerant, the method including a step of blending one or more selected from aromatic ester-based compounds (A) represented by the following general formula (1): 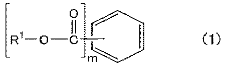 in which, R¹ is a linear or branched alkyl group having 5 or more and 24 or less carbon atoms or a linear or branched alkenyl group having 5 or more and 24 or less carbon atoms; m is an integer of 2 or more and 4 or less; and a plurality of R¹'s may be the same or different.

### Examples

The present invention will be specifically described with reference to the following Examples. However, the present invention is not limited to the following Examples.

### [Measurement Method of Various Physical Property Values]

The measurement of each property of each raw material used in each of Examples and Comparative Examples and the refrigerator oil composition of each of Examples and Comparative Examples was performed according to the following procedure.

### (1) Kinematic viscosity

The kinematic viscosity at 40°C, the kinematic viscosity at 80°C, and the kinematic viscosity at 100°C were measured in accordance with JIS K 2283:2000.

### (2) Viscosity index

The viscosity index was calculated in accordance with JIS K 2283:2000 based on the measurement results of the kinematic viscosity.

### [Production Examples 1 to 4 and Comparative Production Example 1]

The following compounds were prepared as base oils and subjected to the evaluation to be described later.

### <Production Example 1>

To a flask equipped with a Dean-Stark apparatus, 96.07 g (0.5 mol) of trimellitic anhydride, 175.8 g (1.35 mol) of n-octanol, 23.74 g (0.15 mol) of n-decanol, 59.1 g of toluene, and 2.96 g of p-toluenesulfonic acid were added and reacted at 131°C to 150°C. The reaction was terminated when a predetermined amount of water was produced, and the reaction product was washed with a 3% NaOH aqueous solution, and then washed with distilled water until it became neutral. Toluene was distilled off from the obtained oil layer to obtain an aromatic ester-based compound (A)-1 (complete ester of trimellitic acid and n-octanol and n-decanol).

The aromatic ester-based compound (A)-1 is a compound in which in the general formula (1), R¹ is a group selected from a n-octyl group and a n-decyl group, and m = 3.

In addition, in all the molecules of the aromatic ester-based compound (A)-1, the ratio of the n-octyl group to the n-decyl group in R¹ in the general formula (1) is 90:10 in terms of molar ratio.

### <Production Example 2>

An aromatic ester-based compound (A)-2 (complete ester of phthalic acid and oleyl alcohol) was obtained under the same conditions as in Production Example 1, except that phthalic anhydride 74.06 g (0.5 mol) was used instead of trimellitic acid and oleyl alcohol 268.5 g (1.0 mol) was used instead of n-decanol and n-octanol.

The aromatic ester-based compound (A)-2 is a compound in which in the general formula (1), R¹ is an oleyl group, and m = 2.

### <Production Example 3>

An aromatic ester-based compound (A)-3 (complete ester of trimellitic acid and oleyl alcohol) was obtained under the same conditions as in Production Example 1, except that oleyl alcohol 402.7 g (1.5 mol) was used instead of n-decanol and n-octanol.

The aromatic ester-based compound (A)-3 is a compound in which in the general formula (1), R¹ is an oleyl group, and m = 3.

### <Production Example 4>

An aromatic ester-based compound (A)-4 (complete ester of pyromellitic acid and oleyl alcohol) was obtained under the same conditions as in Production Example 1, except that pyromellitic anhydride 109.1 g (0.5 mol) was used instead of trimellitic acid and oleyl alcohol 537.0 g (2.0 mol) was used instead of n-decanol and n-octanol.

The aromatic ester-based compound (A)-4 is a compound in which in the general formula (1), R¹ is an oleyl group, and m = 4.

### <Comparative Production Example 1>

To a 200 mL stainless steel autoclave equipped with a stirrer and a liquid introduction tube, 3.0 g (0.056 mol) of powdered sodium methoxide was added, the autoclave was sealed, the temperature was raised to 105°C, and 77 g (1.32 mol) of propylene oxide was pressurized into the autoclave through the liquid introduction tube over 9 hours. After 100 mL of water and 200 mL of methanol were added to the reaction mixture to dissolve the reaction mixture, the solution was passed through a column of 200 mL of cation exchange resin and then through a column of 200 mL of anion exchange resin to remove sodium ions. After methanol and water were distilled off, the mixture was dried at 100°C under reduced pressure (0.4 mmHg) for 1 hour with a vacuum pump to obtain 70 g of polyoxypropylene glycol monomethyl ether.

Next, 50 g of the polyoxypropylene glycol monomethyl ether obtained by the above procedure and 80 mL of toluene were added to a 300 mL three-neck flask made of glass equipped with a stirrer and a distillation head, and about 20 mL of toluene was distilled off under heating and stirring to remove moisture. After cooling, 25 g (0.13 mol) of a 28 wt% sodium methoxide methanol solution was added, and the mixture was heated to distill off methanol and about 20 ml of toluene.

After cooling, the contents were transferred to a 300 mL stainless steel autoclave equipped with a stirrer, 36.8 g (0.26 mol) of methyl iodide was added, and after the autoclave was sealed, the temperature was raised from 50°C to 70°C over 4.5 hours while stirring, and the reaction was performed at 85°C for 12 hours. After cooling to room temperature, the reaction mixture was dissolved in a mixture of 100 mL of water and 200 mL of methanol, and passed through a column of 200 mL of cation exchange resin and then a column of 200 mL of anion exchange resin. After the solvent was distilled off, the residue was dried at 100°C for 1 hour under reduced pressure (0.1 mm Hg) with a vacuum pump to obtain 42.5 g of non-aromatic ester-based compound (A')-4 (dimethyl ether of polyoxypropylene glycol).

The non-aromatic ester-based compound (A')-4 obtained in Comparative Production Example 1 is a compound represented by the following structural formula (y1).

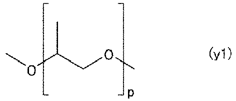

In the above structural formula (y1), p = 12.

### [Examples 1 to 4 and Comparative Examples 1 to 6]

In Examples 1 to 4 and Comparative Examples 1 to 6, the following compounds were used as a refrigerator oil composition and subjected to the evaluation which will be described later.
- Example 1: Aromatic ester-based compound (A)-1 obtained in Production Example 1
- Example 2: Aromatic ester-based compound (A)-2 obtained in Production Example 2
- Example 3: Aromatic ester-based compound (A)-3 obtained in Production Example 3
- Example 4: Aromatic ester-based compound (A)-4 obtained in Production Example 4
- Comparative Example 1: Non-aromatic ester-based compound (A')-1

As the non-aromatic ester-based compound (A')-1, a complete ester of pentaerythritol and 3,5,5-trimethylhexanoic acid was used.

### ·Comparative Example 2: Non-aromatic ester-based compound (A')-2

As the non-aromatic ester-based compound (A')-2, a complete ester of pentaerythritol and 3,5,5-trimethylhexanoic acid and 2-ethylhexanoic acid was used. In the non-aromatic ester-based compound (A')-2, the charged ratio of 3,5,5-trimethylhexanoic acid to 2-ethylhexanoic acid is 50:50 (molar ratio).

### ·Comparative Example 3: Non-aromatic ester-based compound (A')-3

As the non-aromatic ester-based compound (A')-3, a complete ester of pentaerythritol and n-octanoic acid, n-decanoic acid, and 2-ethylhexanoic acid was used.
·Comparative Example 4: Non-aromatic ester-based compound (A')-4 obtained in Comparative Production Example 1
·Comparative Example 5: Mineral oil
·Comparative Example 6: Poly-α-olefin (PAO)

### <Evaluation: Evaluation of Dissolution Viscosity and Solubility>

### (Evaluation of Solubility)

A predetermined amount of the refrigerator oil composition and R290 as a refrigerant were sealed in a pressure-resistant container made of sapphire glass, and the temperature of the pressure-resistant container was raised from room temperature (23°C) to 80°C. A temperature/pressure/solubility curve was prepared by calculation from the volume of the refrigerator oil composition in which R290 was dissolved and the pressure at that time. From the prepared solubility curve, the solubility (% by mass) of R290 of the refrigerator oil composition at 80°C and 2.0 MPa was calculated.

### (Evaluation of Dissolution Viscosity)

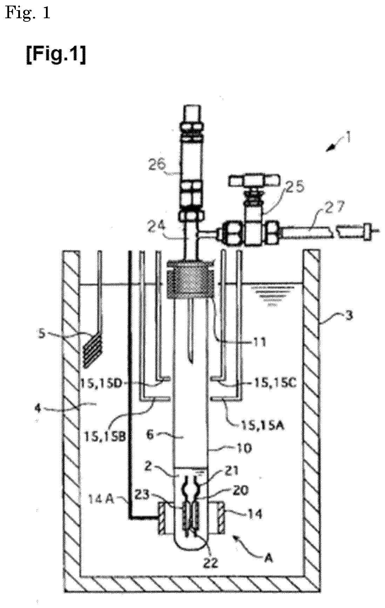

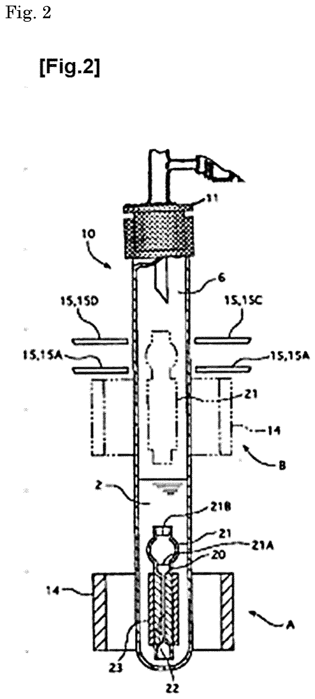

Using a viscosity measurement apparatus 1 shown in Figs. 1 to 3, the dissolution viscosity of the refrigerator oil composition in which the refrigerant was dissolved was measured.

First, a predetermined amount of a refrigerator oil composition 2 and a capillary viscometer 20 were placed in a container 10 made of a sapphire glass tube, and then a lid 11 was closed. Next, after a safety valve 26 and a needle valve 25 were attached to a T-shaped joint 24, the container 10 was immersed in a thermostatic bath 3 containing a heating medium 4. The temperature of the heating medium 4 was maintained at 80°C by a temperature control means 5.

Next, the needle valves 25 and a refrigerant collection line (not shown) were connected to each other via a pressure-resistant hose 27, and the inside of the container 10 and the refrigerant collection line was deaerated to about 13.3 Pa by operating a vacuum pump (not shown). After deaeration, the vacuum pump was stopped, the main valve of the refrigerant container was opened, and the refrigerant (R290) was introduced into the container 10. The refrigerant was introduced so that the pressure of the container 10 was 2.0 MPa.

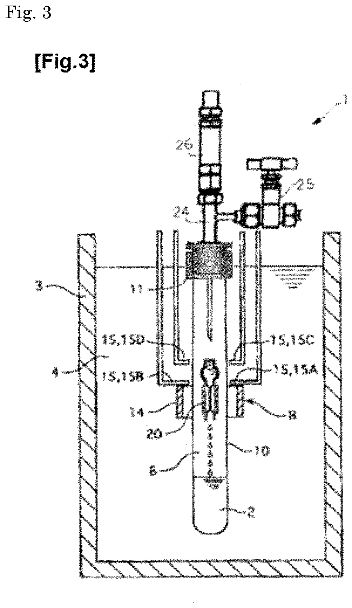

After the refrigerant was introduced, the needle valve 25 was closed, the valve of the refrigerant container was closed, the pressure-resistant hose 27 was cut off, and then the sealed container 10 was installed at a predetermined position in the thermostatic bath 3 in which a permanent magnet 14 had been lowered to position A. When the entire container 10 was brought into a thermally balanced state, the driving means for moving the permanent magnet 14 was started, the permanent magnet 14 was moved, and the capillary viscometer 20 was raised to position B. As a result, as shown in Fig. 3, the refrigerator oil composition 2 in which the refrigerant was dissolved dripped from the capillary viscometer 20, and the liquid surface of the refrigerator oil composition 2 in which the refrigerant was dissolved was lowered. Then, optical fibers 15 (15A, 15B, 15C, 15D) were caused to detect that the liquid surface of the refrigerator oil composition 2 in which the refrigerant was dissolved was passed through a marked line 21B and a marked line 21A, and a viscosity calculator is caused to automatically measure the time required for the refrigerator oil composition 2 in which the refrigerant was dissolved to pass through the inside of a narrow tube part 22 and to automatically measure the viscosity, thereby measuring the dissolution viscosity. The measurement of the dissolution viscosity was performed after confirming that the refrigerant and the refrigerator oil composition were not separated.

In Figs. 1 to 3, reference sign 6 denotes a gas filled in the container 10. Reference sign 14A denotes an arm that holds the permanent magnet 14. Reference sign 21 denotes a liquid reservoir. Reference sign 23 denotes a band-shaped outer annular part made of a magnetic material and fixed to the outer peripheral surface of the side wall of the narrow tube part 22.

The evaluation criteria for the dissolution viscosity were as follows, and Evaluations A and B were regarded as passing.
·Evaluation A: more than 3.5 mm²/s
·Evaluation B: 2.2 mm²/s or more and 3.5 mm²/s or less
·Evaluation C: less than 2.2 mm²/s

It can be said that the higher the dissolution viscosity is, the better the lubricity is even when the hydrocarbon-based refrigerant is dissolved, and the more appropriate the dissolution viscosity is.

The evaluation criteria for the solubility were as follows, and Evaluations A and B were regarded as passing.
·Evaluation A: less than 16.0% by mass
·Evaluation B: 16.0% by mass or more and less than 18.0% by mass
·Evaluation C: 18.0% by mass or more
The lower the solubility, the easier it is to suppress the dissolution of the hydrocarbon-based refrigerant.

The results are shown in Table 1.

**Table 1**

| | | | Unit | Example 1 | Example 2 | Example 3 |
|---|---|---|---|---|---|---|
| Base oil | | | - | Aromatic ester-based compound (A)-1 | Aromatic ester-based compound (A)-2 | Aromatic ester-based compound (A)-3 |
| Various physical property values | Kinematic viscosity | 40°C | mm²/s | 45.43 | 43.29 | 82.77 |
| | Kinematic viscosity | 80°C | mm²/s | 11.67 | 12.71 | 22.20 |
| | Kinematic viscosity | 100°C | mm²/s | 7.25 | 8.19 | 13.77 |
| | Viscosity index | | - | 121 | 166 | 171 |
| Evaluation result | Condition: 80°C, 2.0 MPa | Dissolution viscosity | mm²/s | 2.562 | 3.053 | 4.975 |
| | | Evaluation of dissolution viscosity | - | B | B | A |
| | | Solubility | % by mass | 14.0 | 15.6 | 14.8 |
| | | Evaluation of solubility | - | A | A | A |

**Table 1 (continued)**

| | | | Unit | Example 4 | Comparative Example 1 | Comparative example 2 |
|---|---|---|---|---|---|---|
| Base oil | | | - | Aromatic ester-based compound (A)-4 | Non-aromatic ester-based compound (A')-1 | Non-aromatic ester-based compound (A')-2 |
| Various physical property values | Kinematic viscosity | 40°C | mm²/s | 118.00 | 110.80 | 66.71 |
| | Kinematic viscosity | 80°C | mm²/s | 30.76 | 19.99 | 14.01 |
| | Kinematic viscosity | 100°C | mm²/s | 18.80 | 11.17 | 8.23 |
| | Viscosity index | | - | 179 | 83 | 89 |
| Evaluation result | Condition: 80°C, 2.0 MPa | Dissolution viscosity | mm²/s | 6.089 | 2.067 | 2.108 |
| | | Evaluation of dissolution viscosity | - | A | C | C |
| | | Solubility | % by mass | 15.8 | 18.5 | 16.3 |
| | | Evaluation of solubility | - | A | C | B |

**Table 1 (continued)**

| | | | Unit | Comparative Example 3 | Comparative Example 4 | Comparative Example 5 | Comparative Example 6 |
|---|---|---|---|---|---|---|---|
| Base oil | | | - | Non-aromatic ester-based compound (A')-3 | Non-aromatic ester-based compound (A')-4 | Mineral oil | PAO |
| Various physical property values | Kinematic viscosity | 40°C | mm²/s | 32.79 | 32.46 | 52.84 | 64.32 |
| | Kinematic viscosity | 80°C | mm²/s | 9.23 | 10.78 | 10.23 | 15.96 |
| | Kinematic viscosity | 100°C | mm²/s | 5.91 | 7.214 | 5.94 | 9.76 |
| | Viscosity index | | - | 126 | 196 | 21 | 134 |
| Evaluation result | Condition: 80°C, 2.0 MPa | Dissolution viscosity | mm²/s | 1.878 | 2.066 | 1.294 | 1.998 |
| | | Evaluation of dissolution viscosity | - | C | C | C | C |
| | | Solubility | % by mass | 15.3 | 18.0 | 22.3 | 22.2 |
| | | Evaluation of solubility | - | A | C | C | C |

The following can be seen from Table 1.

It can be seen that, in the aromatic ester-based compounds (A)-1 to (A)-4 of Examples 1 to 4, the dissolution viscosity when the hydrocarbon-based refrigerant was dissolved was high, and the solubility of the hydrocarbon-based refrigerant was also low.

On the other hand, it can be seen that, in the non-aromatic ester-based compound (A')-4 (polyalkylene glycol-based compound) of Comparative Example 4, the mineral oil of Comparative Example 5, and the poly-α-olefin of Comparative Example 6, the dissolution viscosity when the hydrocarbon-based refrigerant was dissolved was low, and the solubility of the hydrocarbon-based refrigerant was also high.

In addition, as in the non-aromatic ester-based compounds (A')-1 to (A')-3 of Comparative Examples 1 to 3, it can be seen that in all of the polyol esters having a structure not having a benzene ring, the dissolution viscosity when the hydrocarbon-based refrigerant was dissolved was low. Furthermore, as in the non-aromatic ester-based compound (A')-1 of Comparative Example 1, it can be seen that the solubility of the hydrocarbon-based refrigerant was high.

## Claims

1. A refrigerator oil composition used for a refrigerant including a hydrocarbon-based refrigerant, the refrigerator oil composition comprising one or more selected from aromatic ester-based compounds (A) represented by the following general formula (1): 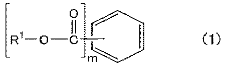 wherein, R¹ is a linear or branched alkyl group having 5 or more and 24 or less carbon atoms or a linear or branched alkenyl group having 5 or more and 24 or less carbon atoms; m is an integer of 2 or more and 4 or less; and a plurality of R¹'s may be the same or different.

2. The refrigerator oil composition according to claim 1, wherein in the general formula (1), R¹ is a linear or branched alkyl group having 6 or more and 22 or less carbon atoms or a linear or branched alkenyl group having 6 or more and 22 or less carbon atoms, and m = 3.

3. The refrigerator oil composition according to claim 1 or 2, wherein a content of the aromatic ester-based compound (A) is 80% by mass or more based on a total amount of the refrigerator oil composition.

4. The refrigerator oil composition according to any one of claims 1 to 3, wherein the hydrocarbon-based refrigerant is a hydrocarbon having 1 or more and 8 or less carbon atoms.

5. A mixed composition for a refrigerator, comprising: the refrigerator oil composition according to any one of claims 1 to 4; and a refrigerant including a hydrocarbon-based refrigerant.

6. A method for producing a refrigerator oil composition used for a refrigerant including a hydrocarbon-based refrigerant, the method comprising a step of blending one or more selected from aromatic ester-based compounds (A) represented by the following general formula (1): 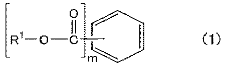 wherein, R¹ is a linear or branched alkyl group having 5 or more and 24 or less carbon atoms or a linear or branched alkenyl group having 5 or more and 24 or less carbon atoms; m is an integer of 2 or more and 4 or less; and a plurality of R¹'s may be the same or different.
